# FASCICULE DE BREVET EUROPEEN

(11) **EP 1 750 965 B1**
(45) Date de publication et mention de la délivrance du brevet: **14.05.2008**
(21) Numéro de dépôt: 05766715.6
(22) Date de dépôt: 31.05.2005
(51) Int. Cl.: B60K 6/387, B60K 6/40, B60K 6/48, F16D 13/72, F16D 25/10, F16D 25/12, F16H 57/04

(54) **EMBRAYAGE DOUBLE HUMIDE POUR CHAINE DE TRACTION HYBRIDE ET PROCEDE DE REFROIDISSEMENT**
NASSE DOPPELKUPPLUNG FÜR HYBRIDANTRIEBSSTRANG UND KÜHLVERFAHREN
DOUBLE WET CLUTCH FOR HYBRID TRACTION CHAIN AND COOLING METHOD

(30) Priorité: 03.06.2004 FR 0406023
(43) Date de publication de la demande: 14.02.2007
(73) Titulaire: PEUGEOT CITROËN AUTOMOBILES S.A., 78140 Vélizy Villacoublay (FR)
(72) Inventeur: COMBES, Emmanuel, F-91410 Sain-Cyr-sous-Dourdan (FR); VICTOR, Jérome, F-78500 Sartrouville (FR)
(86) Numéro de dépôt international: PCT/FR2005/050392
(87) Numéro de publication internationale: WO 2005/123433

(56) Documents cités:
- EP-A- 1 103 404
- EP-A- 1 396 370
- FR-A- 2 814 121
- US-A- 5 110 045
- US-A- 5 217 085
- US-B1- 6 607 142
- PATENT ABSTRACTS OF JAPAN vol. 2002, no. 07, 3 juillet 2002 (2002-07-03) & JP 2002 070997 A (TOYOTA MOTOR CORP), 8 mars 2002 (2002-03-08)

## Description

La présente invention concerne un élément de transmission pour une chaîne de traction de type hybride parallèle, ledit élément comprenant un arbre d'entrée de mouvement destiné à être relié à un moteur thermique, un arbre de sortie de mouvement destiné à être relié à une boîte de vitesses, une machine électrique comportant un stator et un rotor, un premier embrayage de liaison entre l'arbre d'entrée et le rotor, et un second embrayage de liaison entre le rotor et l'arbre de sortie, lesdits embrayages étant de type humide, ledit élément de transmission comportant en outre un circuit de fluide de lubrification et/ou de refroidissement, qui comporte une chambre de lubrification et/ou de refroidissement des embrayages et de la machine électrique, un réservoir de fluide de lubrification et/ou de refroidissement, et au moins une pompe reliée d'une part audit réservoir et d'autre part à ladite chambre.

On entend par chaîne dé traction hybride parallèle une chaîne de traction fournissant à un arbre de roue une énergie mécanique à partir d'au moins un moteur de type « irréversible » (en général un moteur thermique) et d'au moins un moteur de type « réversible » (en général une machine électrique que l'on désignera par la suite par le terme « moteur électrique », étant entendu que ce « moteur » pourra fonctionner suivant un mode moteur et un mode générateur), et dans laquelle le noeud d'énergie provenant des deux moteurs est de nature mécanique.

Un élément de transmission du type ci-dessus est par exemple décrit dans la demande de brevet français FR 2 814 121.

Les éléments de transmission connus de ce type sont en général pourvus d'un circuit de lubrification et/ou de refroidissement dans lequel le fluide suit un trajet invariable : l'alimentation en fluide de la chambre de lubrification et/ou de refroidissement est réalisée à partir du réservoir, le fluide extrait de la chambre de lubrification et/ou de refroidissement étant recyclé dans le réservoir. Ce dernier fait office d'échangeur de chaleur et permet de refroidir le fluide recyclé.

Une telle conception du circuit de lubrification et/ou de refroidissement ne donne pas entière satisfaction, en particulier parce qu'elle ne permet pas, en cas de démarrage du véhicule à froid, d'atteindre rapidement la température de fonctionnement optimal du fluide qui permet de minimiser les pertes par frottement au sein des pièces mécaniques en mouvement.

L'invention a pour objet de résoudre cet inconvénient, et de proposer un élément de transmission du type ci-dessus, dans lequel le fluide de lubrification et/ou de refroidissement circulant dans la chambre de lubrification et/ou de refroidissement peut rapidement atteindre sa température nominale de fonctionnement, à partir d'une température de démarrage inférieure.

A cet effet, dans un élément de transmission conforme à l'invention, ladite pompe est en outre reliée à un canal de recyclage de ladite chambre, le circuit de lubrification et/ou de refroidissement comprenant des moyens de sélection placés en amont de la pompe, de sorte que ladite pompe est susceptible d'alimenter ladite chambre en fluide sous pression sélectivement à partir du réservoir et à partir du canal de recyclage, en fonction de la température du fluide transitant par les moyens de sélection.

Suivant d'autres caractéristiques de l'invention, prises seules ou selon toutes les combinaisons techniquement envisageables :
- les moyens de sélection présentent deux entrées de fluide, dont une première est reliée au réservoir et la deuxième est reliée au canal de recyclage, et une sortie de fluide reliée à la pompe, les moyens de sélection fonctionnant de façon que, en fonctionnement de l'élément de transmission,
   - le débit total de fluide transitant par la sortie des moyens de sélection est sensiblement constant, et
   - sur un domaine de température du fluide transitant par les moyens de sélection, compris entre une valeur de seuil inférieur et une valeur de seuil supérieur, le débit de fluide issu de la deuxième entrée croît lorsque la température diminue ;
- les moyens de sélection comprennent une vanne thermostatique ;
- la chambre de lubrification et/ou de refroidissement des embrayages constitue également une chambre de lubrification et/ou de refroidissement du moteur électrique, de sorte que le circuit de lubrification et/ou de refroidissement des embrayages constituent également un circuit de lubrification et/ou de refroidissement du moteur électrique ;
- l'élément de transmission comprend en outre des moyens de commande desdits embrayages, qui comprennent un circuit hydraulique de commande incluant une chambre de pression pour chaque embrayage, telle que la pression de fluide de commande qui règne dans une chambre de pression détermine l'état de l'embrayage respectif, et le fluide de commande est constitué du fluide de lubrification et/ou de refroidissement, le circuit de commande et le circuit de lubrification et/ou de refroidissement ayant en commun au moins ledit réservoir (251), ledit canal de recyclage, et lesdits moyens de sélection ;
- le circuit hydraulique de commande comporte un bloc de distribution relié à la pompe en aval de cette dernière, et adapté pour distribuer le fluide aux chambres de pression ;
- ledit circuit de commande comprend un accumulateur de pression, et le bloc de distribution comprend une voie d'entrée/sortie reliée audit accumulateur, et une électrovanne de charge/décharge affectée à ladite voie d'entrée/sortie ;
- le bloc de distribution comprend une voie de sortie de commande pour chaque chambre de pression, et une électrovanne de contrôle de débit de commande respective, affectée à chacune desdites voies de commande ;
- lesdites électrovannes de commande sont de type proportionnel ;
- l'élément de transmission comprend une deuxième pompe, reliée en amont à la sortie des moyens de sélection, et en aval, par une voie de sortie de lubrification et/ou de refroidissement, à la chambre de lubrification et/ou de refroidissement.

L'invention a également pour objet un procédé de lubrification et/ou de refroidissement (et éventuellement de commande) des embrayages d'un élément de transmission tel que décrit précédemment, dans lequel :
- on alimente la chambre de lubrification et/ou de refroidissement, et éventuellement les chambres de pression, avec un débit total de fluide à la sortie des moyens de sélection résultant d'un premier débit de fluide issu de la première entrée et d'un deuxième débit de fluide issu de la deuxième entrée, tels que lesdits premier et deuxième débits sont déterminés en fonction de la température du fluide transitant par les moyens de sélection.

De préférence :
- le débit total de fluide transitant par la sortie des moyens de sélection est sensiblement constant, et
- sur un domaine de température du fluide transitant par les moyens de sélection, compris entre une valeur de seuil inférieur et une valeur de seuil supérieur, le débit de fluide issu de la deuxième entrée croît lorsque la température diminue.

L'invention a enfin pour objet un véhicule automobile comprenant un élément de transmission tel que décrit précédemment.

Un mode particulier de réalisation de l'invention va maintenant être décrit plus en détail en référence aux dessins annexés, sur lesquels :
- la Figure 1 est une vue partielle en demi-coupe axiale d'un élément de transmission selon l'invention ;
- la Figure 2 est une vue de détail de la Figure 1, à plus grande échelle, qui représente un module de l'élément de transmission, comprenant essentiellement les embrayages, les arbres d'entrée et de sortie, l'organe intermédiaire et les pistons ; et
- la Figure 3 est un schéma du circuit hydraulique de commande, et du circuit hydraulique de refroidissement et de lubrification de l'élément de transmission des Figures 1 et 2.

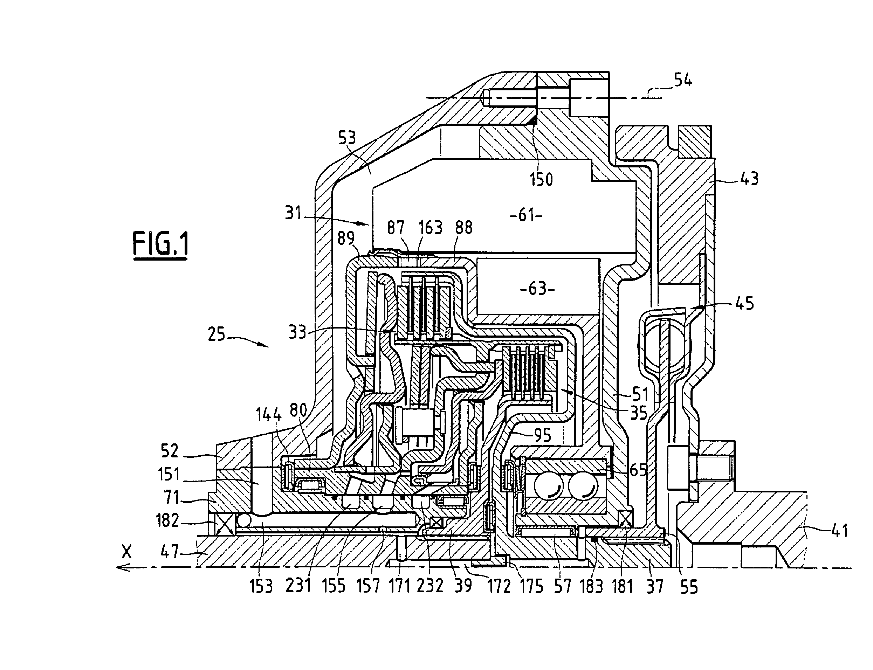

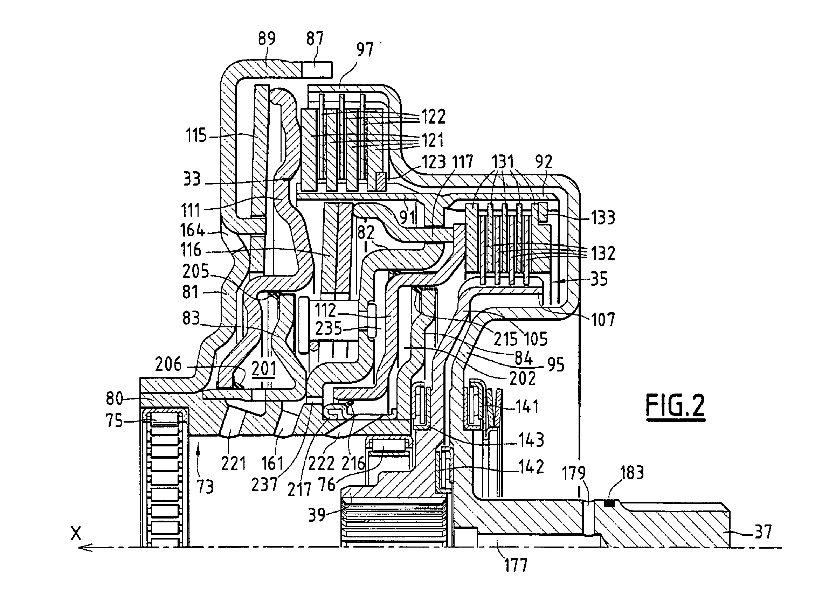

Sur les Figures 1 et 2, on a représenté un élément de transmission 25 conforme à l'invention, destiné à relier un moteur thermique à une boîte de vitesses. L'élément 25 de l'invention comporte une machine électrique 31, que l'on appellera « moteur électrique », un premier embrayage 33, et un deuxième embrayage 35.

L'élément de transmission 25 comporte en outre un arbre d'entrée de mouvement 37 et un arbre de sortie de mouvement 39 coaxiaux d'axe X. L'axe X est orienté de l'entrée vers la sortie pour la commodité de la description qui va suivre.

Les termes « amont » et « aval » s'entendront en référence à cette orientation.

L'arbre d'entrée 37 est solidaire en rotation du vilebrequin du moteur thermique, dont une partie, ou « nez », est représentée sur la Figure 1 sous la référence 41.

Dans l'exemple représenté, le vilebrequin 41 est muni d'un volant d'inertie 43, et relié à l'arbre d'entrée 37 par l'intermédiaire d'un dispositif amortisseur 45.

L'arbre de sortie 39 est lié en rotation à l'arbre primaire d'entrée de boîte de vitesses, dont une partie est représentée sur la Figure 1 sous la référence 47.

L'élément de transmission 25 comprend un carter constitué essentiellement d'une première demi-coquille 51 et d'une deuxième demi-coquille 52, assemblées par des moyens de fixation répartis sur la périphérie du carter et symbolisés sur la figure 1 par des lignes mixtes 54. Les demi-coquilles de carter 51, 52 délimitent intérieurement un logement 53, à l'intérieur duquel sont agencés le moteur électrique 31, les embrayages 33, 35 et les arbres d'entrée 37 et de sortie 39, de façon coaxiale.

L'arbre d'entrée 37 et l'arbre de sortie 39 sont montés rotatifs par rapport au carter 51, 52.

L'arbre d'entrée 37 est un arbre cannelé complémentaire d'un arbre creux 55 du dispositif amortisseur 45, et une partie d'extrémité de l'arbre d'entrée 37 fait saillie axialement de la première demi-coquille 51. L'arbre d'entrée 37 est monté rotatif sur la première demi-coquille 51 par l'intermédiaire d'un palier de roulement 57.

L'arbre de sortie 39 est un arbre creux à cannelures internes, de forme complémentaire de l'extrémité d'arbre d'entrée de boîte 47. Pour être mise en prise avec l'arbre de sortie 39, l'extrémité de l'arbre d'entrée de boîte 47 fait saillie à l'intérieur du logement 53.

Le moteur électrique 31 comprend un stator 61, pourvu d'un collecteur, solidaire de la première demi-coquille de carter 51, et un rotor 63 monté rotatif sur la première demi-coquille 51 par l'intermédiaire d'un roulement 65. Le rotor 63 est agencé radialement à l'intérieur du stator 61.

Les premier 33 et deuxième 35 embrayages sont de type humide, et l'élément de transmission 25 est muni d'un tube axial 71 de distribution de fluide de lubrification et de refroidissement ainsi que de commande. Ce tube 71 fait saillie à l'intérieur du logement 53 de la deuxième coquille de carter 52.

L'élément de transmission 25 comporte un organe intermédiaire de transmission 73 monté rotatif sur le tube 71, radialement à l'extérieur, par l'intermédiaire de deux roulements 75, 76.

L'organe intermédiaire 73 est formé essentiellement avec un moyeu 80, et quatre parois radiales 81, 82, 83, 84 décalées axialement les unes par rapport aux autres, et rendues solidaires du moyeu 80 par soudure pour les parois 81, 82, 84, et par frettage pour la paroi 83.

L'organe intermédiaire 73 est lié en rotation au rotor 63 par l'intermédiaire de dents axiales complémentaires 87 mutuellement en prise, et formées respectivement sur une partie périphérique du rotor 63, et sur une partie périphérique de la première paroi radiale 81.

La deuxième paroi radiale 82 est formée avec une couronne périphérique solidaire constituée d'une première demi-couronne 91 s'étendant dans la direction axiale aval, et d'une deuxième demi-couronne 92 s'étendant dans la direction axiale amont.

De façon correspondante, l'arbre d'entrée 37 est formé, de préférence d'une pièce, avec une paroi radiale 95 qui s'étend à l'intérieur du logement 53, et qui possède en périphérie une couronne axiale 97. La couronne axiale 97 s'étend de façon coaxiale et radialement extérieure par rapport à la demi-couronne aval 91. Le premier embrayage 33 est agencé entre ladite demi-couronne 91 et ladite couronne 97.

De la même façon, l'arbre de sortie 39 est formé, de préférence d'une seule pièce, avec une paroi radiale 105 qui s'étend à l'intérieur du logement 53, et qui présente à sa périphérie une couronne axiale 107. La couronne axiale 107 s'étend de façon coaxiale et radialement intérieure par rapport à la demi-couronne amont 92 de l'organe intermédiaire 73. Le deuxième embrayage 35 est agencé entre ladite demi-couronne 92 et ladite couronne axiale 107.

L'élément de transmission 25 comprend en outre un premier 111 et un deuxième 112 pistons d'actionnement respectivement du premier 33 et du deuxième 35 embrayages, ainsi qu'un premier 115 et un deuxième 116 organes-ressorts sollicitant respectivement le premier 111 et le deuxième 112 pistons en pression sur l'embrayage respectif 33, 35.

Entre le piston 112 et l'organe-ressort 116 est interposée, en appui axial, une entretoise présentant des doigts 117 essentiellement axiaux répartis sur la périphérie d'une couronne. Ces doigts 117 traversent la paroi 82.

Le premier embrayage 33 est essentiellement constitué d'une première série de disques 121 liés en rotation à la première demi-couronne 91 par des cannelures, et déplaçables axialement sur cette dernière, le long de ces cannelures, sous l'effet du piston 111 ; et d'une deuxième série de disques 122 liés en rotation à la couronne axiale 97 par des cannelures, et déplaçables axialement sur cette dernière, le long de ces cannelures également sous l'effet du piston 111. Les premiers 121 et deuxièmes 122 disques sont imbriqués les uns avec les autres de façon alternée.

Les disques 121, 122 sont arrêtés axialement par une butée 123 opposée au piston 111.

On comprend que les disques 121, 122 peuvent passer d'une position débrayée, dans laquelle les premiers disques 121 ne font pas contact avec les deuxièmes disques 122, et une position embrayée des premiers 121 et deuxièmes 122 disques dans laquelle les premiers 121 et deuxièmes 122 disques sont serrés les uns contre les autres.

Dans la position débrayée, l'arbre d'entrée 37 et l'organe intermédiaire 73 sont libres en rotation l'un par rapport à l'autre.

Le premier organe-ressort 115, constitué dans l'exemple représenté d'une rondelle-ressort, du type par exemple rondelle Belleville, est fixée à la première paroi radiale 81, et sollicite le piston 111 dans la position embrayée.

Le deuxième embrayage 35 est de constitution et de fonctionnement analogues au premier : il comprend une première série de disques 131 associée à la deuxième demi-couronne 92, et une deuxième série de disques 132 intercalés, associée à la couronne axiale 107. Le déplacement axial des disques 131, 132 est limité par une butée 133.

Dans l'exemple représenté, l'organe-ressort 116 est une double rondelle ressort, du type Belleville, fixée à la deuxième paroi 82. L'organe-ressort 116 sollicite le piston 112 vers la position embrayée du deuxième embrayage 35, par l'intermédiaire des doigts 117.

Comme on le voit sur la Figure 1, les deux embrayages 33, 35 sont décalés axialement et radialement suivant une disposition étagée ou « en escalier », à savoir que le premier embrayage 33 est disposé radialement à l'extérieur par rapport au deuxième embrayage 35. Ce dernier est agencé à l'intérieur du rotor 63.

L'élément de transmission 25 est en outre pourvu de butées à aiguilles, dont une première 141 est interposée axialement entre le roulement 65 et la paroi radiale 95 de l'arbre d'entrée 37 ; une deuxième 142 est interposée axialement entre la paroi radiale 95 et la paroi radiale 105 de l'arbre de sortie 39 ; une troisième 143 est interposée entre la paroi radiale 105 et la paroi radiale 84 de l'organe intermédiaire 73 ; et une quatrième 144 est interposée entre le moyeu 80 et un épaulement du tube 71.

Le tube de distribution de fluide 71 est adapté pour distribuer du fluide de lubrification et de refroidissement à l'intérieur de l'élément de transmission 25, c'est-à-dire à l'intérieur du logement 53. Ce dernier est fermé de façon étanche à ce fluide, notamment au niveau des jointures des deux demi-coquilles 51, 52 de carter, au moyen d'un joint périphérique 150.

Au voisinage de l'axe X, l'étanchéité de l'élément de transmission 25 au fluide de lubrification et de refroidissement est réalisée d'une part par un premier joint à lèvres 181, qui prend appui sur la première demi-coquille 51 et la surface extérieure de l'arbre creux 55, et par un deuxième joint à lèvres 182, qui prend appui sur la surface interne du tube 71 et sur les surfaces externes de l'arbre primaire d'entrée de boîte 47, et d'autre part par un joint torique 183 placé entre l'arbre d'entrée 37 et l'arbre creux 55.

Ce tube 71 présente, ménagé dans sa paroi, un premier canal radial 151 d'alimentation en fluide, un premier canal axial 153 de distribution relié audit canal d'alimentation 151, un orifice 155 ménagé entre le canal de distribution 153 et l'extérieur du tube 71, et un orifice 157 ménagé entre le canal de distribution 153 et l'intérieur du tube.

Le moyeu 80 de l'organe intermédiaire 73 est pourvu d'un canal 161 débouchant sur l'orifice 155, et mettant ainsi en communication le canal de distribution 153 et le logement 53.

En fonctionnement, le canal d'alimentation 151 est relié à un circuit, qui sera décrit plus loin, d'alimentation en fluide de refroidissement et de lubrification. Ce fluide est diffusé à l'intérieur du logement 53 via le canal de distribution 153, l'orifice 155, et le canal 161, de façon à lubrifier et refroidir le premier embrayage 33, le deuxième embrayage 35, et le moteur électrique 31.

On notera que le fluide de lubrification et de refroidissement est diffusé radialement vers le stator 61, grâce notamment au passage 163 ménagé au niveau des dents 87. Le dimensionnement de ce passage 163 permet de maîtriser le débit de fluide organisé entre la partie du logement 53 intérieure au rotor 63, et la partie extérieure dans laquelle est agencé le stator 61.

On notera également que la disposition relative des embrayages 33, 35, et du moteur électrique 31, permet, du fait de la centrifugation du fluide de lubrification et de refroidissement, de conserver le premier embrayage 33 dans un bain de fluide de lubrification et de refroidissement, en fonctionnement de l'élément de transmission 25, tandis que la région du deuxième embrayage 35 est le siège d'un brouillard de ce même fluide. L'intérêt de cette disposition est d'adapter la quantité de fluide, présente dans la région de chaque embrayage, notamment à l'énergie calorifique générée par ces embrayages.

Le bain de fluide, en général d'huile, dans lequel est conservé l'embrayage 33, est nivelé grâce à un passage 164 au niveau de la paroi radiale 81.

Le premier embrayage 33 étant soumis à des échauffements plus importants que le deuxième 35, il est en effet nécessaire d'organiser, au voisinage du premier embrayage, un débit de fluide de refroidissement nettement plus important.

Les échauffements plus importants de l'embrayage 33 par rapport à l'embrayage 35 sont dus aux phases de glissement, qui sont plus contraignantes pour le premier que pour le second. Par ailleurs, le fait de maintenir l'embrayage 35 dans un brouillard de fluide, plutôt que dans un bain, permet de réduire les efforts de traînée de ce fluide sur l'arbre primaire de boîte.

D'autre part, le fluide de refroidissement et de lubrification est distribué vers le palier 57 et le roulement 65 pour refroidir et lubrifier ces derniers, par l'intermédiaire successivement : du canal de distribution 153 ; de l'orifice 157 ; d'un passage radial 171 formé dans l'arbre primaire d'entrée de boîte 47 ; d'un canal axial 172 pratiqué dans cet arbre ; d'un ajutage 175 permettant de régler le débit de fluide ; d'un canal axial 177 formé dans l'arbre d'entrée 37; et enfin d'un passage radial 179 débouchant au voisinage du palier 57.

Le fluide distribué suivant ce cheminement s'écoule dans le logement 53, au travers du palier 57, vers le roulement 65 et le rotor 63, puis vers le stator 61. Le stator 61 et le rotor 63 sont donc refroidis et lubrifiés non seulement par du fluide ayant transité par l'orifice 155 et les passages 163, 164, mais également par du fluide ayant transité par l'orifice 157 et le cheminement précédemment détaillé. Ce fluide permet également de lubrifier les butées 141, 142, 143.

On va maintenant décrire les dispositions permettant de déplacer les pistons ou plateaux de pression 111, 112 et ainsi de faire passer les embrayages 33, 35 d'une position à une autre parmi leurs positions embrayée et débrayée.

Le premier piston 111 définit, avec la troisième paroi radiale 83 et la surface extérieure du moyeu 80, une première chambre de pression 201, tandis que le deuxième piston 112 définit, avec la quatrième paroi radiale 84 et la surface extérieure du moyeu 80, une deuxième chambre de pression 202.

La première chambre de pression 201 est rendue sensiblement étanche à un fluide de commande au moyen d'un joint à lèvres 205 fixé en périphérie de la paroi radiale 83, et portant sur une surface du piston 111, et d'un joint à lèvres 206 fixé sur un bord radialement interne du piston 111, et portant sur la surface extérieure du moyeu 80.

De façon analogue, la chambre de pression 202 est rendue sensiblement étanche par un premier joint 215 portant sur la paroi radiale 84 et le piston 112, et par un deuxième joint à lèvres 216 portant sur le piston 112 et la surface extérieure d'une pièce 217 rapportée sur le moyeu 80.

Chaque chambre de pression 201, 202 débouche dans l'alésage central du moyeu 80 via deux canaux respectifs 221, 222 de passage d'alimentation en fluide de commande, formés dans le moyeu 80.

Le tube de distribution de fluide 71 est pourvu, pour sa part, de deux canaux 231, 232 reliés à un circuit d'alimentation en fluide de commande via des canaux radiaux d'alimentation respectifs (non représentés) analogues au canal 151, et des canaux axiaux de distribution respectifs (non représentés) analogues au canal 153. Les canaux 231, 232 communiquent respectivement avec les passages 221, 222.

Dans l'exemple représenté, le fluide de commande est le même que le fluide de lubrification/refroidissement, les circuits de commande et de lubrification/refroidissement étant partiellement communs.

On comprend qu'à partir de la position initiale fermée de l'embrayage 33, 35, le passage à la position débrayée est réalisé par alimentation de la chambre de pression respective 201, 202 en fluide de commande sous pression. Le piston correspondant 111, 112 est alors déplacé axialement vers la direction aval, selon l'orientation de l'axe X (vers la gauche sur la figure 2), en comprimant l'organe ressort 115, 116 et en desserrant les empilages de disques 121, 122, 131, 132.

Sous l'effet du ressort 115, 116, le piston 111, 112 reprend sa position initiale lorsque l'on ramène la pression en fluide de commande dans la chambre de pression respective 201, 202 à sa valeur initiale basse. L'embrayage 33, 35 reprend alors sa position dite « naturellement fermée », c'est-à-dire embrayée, en l'absence d'alimentation de la chambre de pression 201, 202 en fluide de commande.

Il est entendu que les deux embrayages 33, 35 peuvent être actionnés indépendamment, et que la description qui précède relative au fonctionnement des embrayages 33, 35 s'applique à l'un et à l'autre de façon indépendante.

En outre, la pression de fluide de commande qui peut être délivrée aux chambres de pression 201, 202 peut varier sur une plage de valeurs, telle que l'embrayage correspondant 33, 35 peut être amené dans l'un parmi des états de transmission nulle (débrayée), totale (embrayée), ou partielle (glissante).

Il faut noter que la deuxième paroi radiale 82 et le piston 112 définissent entre eux une chambre de compensation 235, située du côté opposé à la deuxième chambre de pression 202 par rapport au piston 112. Cette chambre de compensation 235 est alimentée en fluide de lubrification et de refroidissement via le canal 161 et un orifice 237 ménagé dans la paroi radiale 82. Ainsi, à haut régime, les efforts supplémentaires engendrés sur le piston 112 par la centrifugation du fluide de commande contenu dans la deuxième chambre de pression 202 sont compensés, et le piston 112 fonctionne en permettant le passage, entre les disques 131, 132, du couple pour lequel il a été dimensionné. On peut également noter que le dimensionnement de l'embrayage 33, du piston 111, et du ressort 115, permet de s'affranchir d'une chambre de compensation pour la commande de cet embrayage 33.

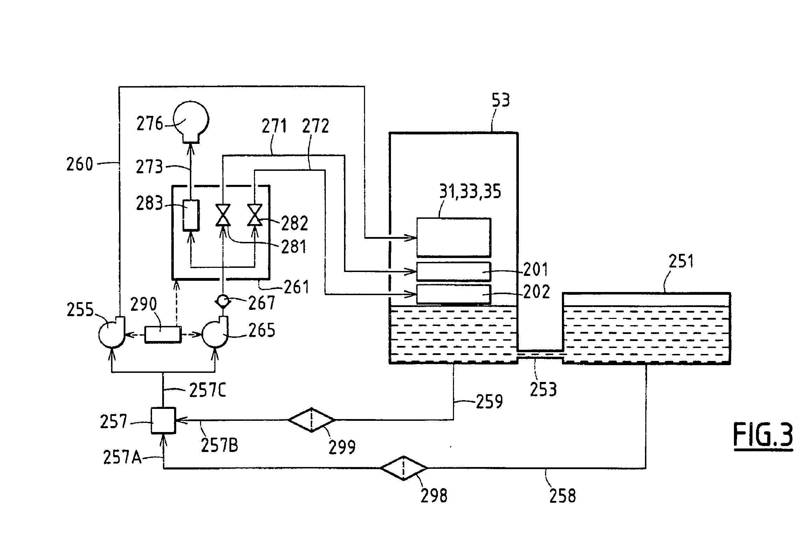

En référence à la Figure 3, on va maintenant décrire le circuit hydraulique de commande des embrayages 33, 35, et le circuit hydraulique de refroidissement et de lubrification de l'élément de transmission 25.

Le circuit de lubrification et de refroidissement comprend une chambre de lubrification et de refroidissement constituée, dans l'exemple représenté, du logement 53 dans lequel sont ménagés d'une part le moteur électrique 31 et les embrayages 33, 35, et d'autre part les deux chambres de pression 201, 202 sensiblement étanches au fluide de lubrification et de refroidissement contenu dans la chambre 53. En réalité, les joints 205, 206, 215, 216 n'assurent pas une étanchéité parfaite et laissent s'écouler, avec un très faible débit, le fluide utilisé pour déplacer les pistons 111, 112 dans le logement 53, de sorte que le fluide servant au circuit de commande se mélange dans le logement 53 avec le fluide servant au circuit de lubrification et de refroidissement.

Le circuit de commande des embrayages 33, 35 utilise ainsi le même fluide que le circuit de lubrification et de refroidissement, et présente une partie commune avec ce dernier. Le circuit de commande et en particulier ladite partie commune seront détaillés ultérieurement.

Le circuit de lubrification et de refroidissement comprend en outre un réservoir de fluide 251, et un canal de décharge 253, par l'intermédiaire duquel sont reliées une sortie de la chambre 53 et une entrée du réservoir constituant une entrée de recirculation du fluide.

Le circuit de lubrification et de refroidissement comprend par ailleurs une première pompe 255, et une vanne thermostatique 257 à deux entrées 257A, 257B et une sortie 257C. La pompe 255 est du type basse pression et fort débit.

La première entrée 257A de la vanne thermostatique 257 est reliée à une sortie du réservoir 251 via un canal principal d'alimentation 258, tandis que la deuxième entrée 257B est reliée à une sortie de la chambre de lubrification et de refroidissement 53 via un canal de recyclage 259.

La sortie 257C est reliée à l'entrée de la pompe 255.

La sortie de la pompe 255 communique avec la chambre de lubrification et de refroidissement 53 par un canal de lubrification et de refroidissement 260, permettant d'amener, au voisinage des pièces mécaniques mobiles du moteur électrique 31 et des embrayages 33, 35, du fluide de lubrification et de refroidissement.

Le circuit de commande des embrayages 33, 35 possède un bloc de distribution 261 et une deuxième pompe 265, dont l'entrée est reliée à la sortie 257C de la vanne thermostatique 257, et dont la sortie est reliée au bloc de distribution 261 par l'intermédiaire d'un clapet anti-retour 267. La pompe 265 est du type haute pression et faible débit.

Le bloc de distribution 261 comprend une première voie de sortie 271 reliée à la première chambre de distribution 201, et une deuxième voie de sortie 272 reliée à la deuxième chambre de pression 202. Dans l'exemple représenté, le bloc de distribution 261 est aussi pourvu d'une troisième voie 273 d'entrée/sortie, reliée à un accumulateur de pression 276 du circuit de commande.

Le bloc de distribution 261 comprend, pour chaque voie 271-273, une électrovanne respective 281-283 permettant de sélectivement fermer ou ouvrir, éventuellement partiellement, la voie à laquelle elle est affectée.

Dans l'exemple représenté :
- les première 281 et deuxième 282 électrovannes affectées respectivement aux première 271 et deuxième 272 voies de sortie sont du type « proportionnel ». Ces électrovannes peuvent prendre plusieurs positions intermédiaires entre des positions extrêmes complètement ouvertes et complètement fermées, en fonction d'un signal de commande ; et
- la troisième électrovanne 283 affectée à la troisième voie 273 d'entrée/sortie est du type «on/off ».

La pompe basse pression 255 du circuit de lubrification et de refroidissement, et la pompe haute pression 265 du circuit de commande, ainsi que les électrovannes 281-283 du bloc de distribution 261 peuvent être pilotées par une unité de commande centralisée 290.

On notera que le canal principal d'alimentation 258 et le canal de recyclage 259 sont de préférence pourvus chacun d'un élément de filtration respectif (ou crépine) 298, 299.

Comme indiqué précédemment, le circuit de commande et le circuit de lubrification et de refroidissement ont une partie commune incluant essentiellement, dans l'exemple représenté, le réservoir 251, le canal principal d'alimentation 258, le canal de recyclage 259, et la vanne thermostatique 257.

En fonctionnement, la pompe basse pression 255 est susceptible de fournir à la chambre de lubrification et de refroidissement 53 du fluide sous pression provenant du réservoir 251 et/ou de la chambre de lubrification et de refroidissement 53 via lé canal de recyclage 259, en fonction de l'état de la vanne thermostatique 257. Il a déjà été décrit en référence aux Figures 1 et 2 comment le fluide servant à la lubrification et au refroidissement peut circuler à l'intérieur du logement 53 pour atteindre les organes récepteurs, constitués de la machine électrique 31 et des embrayages 33, 35, et plus spécifiquement du logement 53 et des chambres de pression 201, 202.

Comme illustré sur la Figure 3, ce fluide est remis en circulation par l'intermédiaire du canal de décharge 253 vers le réservoir 251, ou par l'intermédiaire du canal de recyclage 259.

Comme évoqué précédemment, le fluide distribué aux chambres de pression 201, 202, lui, s'écoule involontairement dans le logement 53 grâce aux inévitables fuites au niveau des joints 205, 206, 215, 216. Les flux de fluide ayant effectué un cycle, que ce soit pour la lubrification/refroidissement ou pour la commande d'embrayage, sont donc remélangés dans le logement 53.

Le réservoir 251 fait office d'échangeur de chaleur et permet au fluide qu'il contient d'être refroidi, lorsque le fluide parvient à une température supérieure à la température ambiante ou à une température d'équilibre donnée.

Le fonctionnement de la vanne thermostatique 257 va à présent être explicité.

La vanne thermostatique 257 est prévue pour assurer un débit constant en sortie 257C, ce débit de sortie résultant de la somme du débit à la première entrée 257A et du débit à la deuxième entrée 257B. La vanne thermostatique 257 a pour fonction de régler la contribution dans le débit de sortie de chacune desdites entrées, en fonction de la température du fluide transitant dans la vanne. Ainsi la vanne thermostatique 257 sélectionne l'origine du fluide qui est délivré aux organes récepteurs 53, 201, 202, entre le canal principal d'alimentation 258 et le canal de recyclage 259.

Le principe d'une vanne thermostatique est connu et ne sera pas décrit en détail dans la présente demande. On signalera seulement qu'une vanne thermostatique comprend de façon classique, à l'intérieur d'un corps de vanne, un organe sensible formant paroi dont la position dépend de sa température.

Plus précisément, dans la forme de réalisation de l'invention décrite ici, la vanne thermostatique 257 fonctionne de la façon suivante : sur une plage de température de fonctionnement, l'élément sensible de la vanne thermostatique 257 se déplace ou se déforme de façon à modifier la section de passage de chacune des entrées 257A, 257B, et ce de façon complémentaire, c'est-à-dire de façon à maintenir le débit en sortie 257C constant. La vanne thermostatique 257 fonctionne de façon que la section de passage libre de la première entrée 257A, sur la plage de température de fonctionnement, augmente avec la température, selon une loi qui peut par exemple être linéaire. De façon complémentaire, sur cette même plage de température, la section de passage libre de la deuxième entrée 257B augmente lorsque la température de l'élément sensible, c'est-à-dire la température de fluide transitant par la vanne thermostatique 257, diminue.

Dans une première position extrême correspondant à la température de seuil inférieur de la plage de fonctionnement, l'élément sensible de la vanne thermostatique 257 peut obturer totalement la première entrée 257A et libérer totalement la deuxième entrée 257B.

A l'inverse, pour une température supérieure à la température de seuil supérieur de la plage de fonctionnement, l'élément sensible peut obturer totalement la deuxième entrée 257B et libérer totalement la première entrée 257A. Ce cas correspond à une deuxième position extrême.

Le premier de ces cas extrêmes correspond par exemple à des conditions transitoires de démarrage à froid, dans lesquelles la température du fluide doit être rapidement augmentée, pour parvenir à une efficacité optimale du fluide.

Le deuxième cas extrême correspond en revanche à des phases de fonctionnement permanent, qui suivent des phases transitoires, dans lesquelles le fluide a atteint sa température de fonctionnement optimal.

On comprend que lorsque la deuxième entrée est partiellement ouverte, du fluide ayant transité dans le circuit de lubrification et/ou de refroidissement est recyclé via le canal de recyclage 259, et directement réintroduit dans l'un et l'autre des circuits de lubrification et/ou de refroidissement, et de commande, de sorte que ce fluide n'est pratiquement pas laissé au repos dans le réservoir 251 pour refroidissement. Du fluide non refroidi provenant du canal de recyclage 259 est alors mélangé, avec un taux de dilution plus ou moins important, avec du fluide refroidi provenant du réservoir 251.

## Revendications

1. Elément de transmission pour une chaîne de traction de type hybride parallèle, ledit élément (25) comprenant un arbre (37) d'entrée de mouvement destiné à être relié à un moteur thermique, un arbre (39) de sortie de mouvement destiné à être relié à une boîte de vitesses, une machine électrique (31) comportant un stator (61) et un rotor (63), un premier embrayage (33) de liaison entre l'arbre d'entrée (37) et le rotor (63), et un second embrayage (35) de liaison entre le rotor (63) et l'arbre de sortie (39), lesdits embrayages (33, 35) étant de type humide, ledit élément de transmission (25) comportant en outre un circuit de fluide de lubrification et/ou de refroidissement, qui comporte une chambre (53) de lubrification et/ou de refroidissement des embrayages (33, 35) et de la machine électrique (31), un réservoir (251) de fluide de lubrification et/ou de refroidissement, et au moins une pompe (255, 265) reliée d'une part audit réservoir (251) et d'autre part à ladite chambre (53), **caractérisé en ce que** ladite pompe (255, 265) est en outre reliée à un canal de recyclage (259) de ladite chambre (53), le circuit de lubrification et/ou de refroidissement comprenant des moyens de sélection (257) placés en amont de la pompe (255, 265), de sorte que ladite pompe est susceptible d'alimenter ladite chambre (53) en fluide sous pression sélectivement à partir du réservoir (251) et à partir du canal de recyclage (259), en fonction de la température du fluide transitant par les moyens de sélection (257).

2. Elément de transmission suivant la revendication 1, **caractérisé en ce que** les moyens de sélection (257) présentent deux entrées de fluide (257A, 257B), dont une première (257A) est reliée au réservoir (251) et la deuxième (257B) est reliée au canal de recyclage (259), et une sortie de fluide (257C) reliée à la pompe (255, 265), les moyens de sélection (257) fonctionnant de façon que, en fonctionnement de l'élément de transmission,
- le débit total de fluide transitant par la sortie (257C) des moyens de sélection (257) est sensiblement constant, et
- sur un domaine de température du fluide transitant par les moyens de sélection (257), compris entre une valeur de seuil inférieur et une valeur de seuil supérieur, le débit de fluide issu de la deuxième entrée (257B) croît lorsque la température diminue.

3. Elément de transmission suivant la revendication 2, **caractérisé en ce que** les moyens de sélection (257) comprennent une vanne thermostatique.

4. Elément de transmission suivant l'une quelconque des revendications 1 à 3, **caractérisé en ce que** la chambre (53) de lubrification et/ou de refroidissement des embrayages (33, 35) constitue également une chambre de lubrification et/ou de refroidissement du moteur électrique (31), de sorte que le circuit de lubrification et/ou de refroidissement des embrayages (33, 35) constituent également un circuit de lubrification et/ou de refroidissement du moteur électrique (31).

5. Elément de transmission suivant l'une quelconque des revendications 1 à 4, comprenant en outre des moyens de commande desdits embrayages (33, 35), qui comprennent un circuit hydraulique de commande incluant une chambre de pression (201, 202) pour chaque embrayage (33, 35), telle que la pression de fluide de commande qui règne dans une chambre de pression (201, 202) détermine l'état de l'embrayage respectif (33, 35), **caractérisé en ce que** le fluide de commande est constitué du fluide de lubrification et/ou de refroidissement, le circuit de commande et le circuit de lubrification et/ou de refroidissement ayant en commun au moins ledit réservoir (251), ledit canal de recyclage (259), et lesdits moyens de sélection (257).

6. Elément de transmission suivant la revendication 5, **caractérisé en ce que** le circuit hydraulique de commande comporte un bloc de distribution (261) relié à la pompe (265) en aval de cette dernière, et adapté pour distribuer le fluide aux chambres de pression (201, 202).

7. Elément de transmission suivant la revendication 6, **caractérisé en ce que** ledit circuit de commande comprend un accumulateur de pression (276), et le bloc de distribution (261) comprend une voie d'entrée/sortie (273) reliée audit accumulateur (276), et une électrovanne (283) de charge/décharge affectée à ladite voie d'entrée/sortie.

8. Elément de transmission suivant la revendication 6 ou 7, **caractérisé en ce que** le bloc de distribution (261) comprend une voie de sortie de commande (271, 272) pour chaque chambre de pression (201, 202), et une électrovanne de contrôle de débit de commande respective (281, 282), affectée à chacune desdites voies de commande.

9. Elément de transmission suivant la revendication 8, **caractérisé en ce que** lesdites électrovannes de commande (281, 282) sont de type proportionnel.

10. Elément de transmission suivant l'une quelconque des revendications 1 à 9, **caractérisé en ce qu'**il comprend une deuxième pompe (255), reliée en amont à la sortie (257C) des moyens de sélection (257), et en aval, par une voie de sortie de lubrification et/ou de refroidissement (260), à la chambre de lubrification et/ou de refroidissement (53).

11. Procédé de lubrification et/ou de refroidissement des embrayages (33, 35) d'un élément de transmission selon l'une quelconque des revendications 1 à 10, **caractérisé en ce qu'**en fonctionnement de l'élément de transmission,
- on alimente la chambre de lubrification et/ou de refroidissement (53) avec un débit total de fluide à la sortie (257C) des moyens de sélection (257) résultant d'un premier débit de fluide issu de la première entrée (257A) et d'un deuxième débit de fluide issu de la deuxième entrée (257B), tels que lesdits premier et deuxième débits sont déterminés en fonction de la température du fluide transitant par les moyens de sélection (257).

12. Procédé selon la revendication 11, **caractérisé en ce que**
- le débit total de fluide transitant par la sortie (257C) des moyens de sélection (257) est sensiblement constant, et
- sur un domaine de température du fluide transitant par les moyens de sélection (257), compris entre une valeur de seuil inférieur et une valeur de seuil supérieur, le débit de fluide issu de la deuxième entrée (257B) croît lorsque la température diminue.

13. Procédé de lubrification et/ou de refroidissement et de commande des embrayages (33, 35) d'un élément de transmission suivant l'une quelconque des revendications 5 à 9, **caractérisé en ce qu'**en fonctionnement de l'élément de transmission :
- on alimente la chambre de lubrification et/ou de refroidissement (53), et éventuellement les chambres de pression (201, 202), avec un débit total de fluide à la sortie (257C) des moyens de sélection (257) résultant d'un premier débit de fluide issu de la première entrée (257A) et d'un deuxième débit de fluide issu de la deuxième entrée (257B), tels que lesdits premier et deuxième débits sont déterminés en fonction de la température du fluide transitant par les moyens de sélection (257).

14. Procédé suivant la revendication 13, **caractérisé en ce que**
- le débit total de fluide transitant par la sortie (257C) des moyens de sélection (257) est sensiblement constant, et
- sur un domaine de température du fluide transitant par les moyens de sélection (257), compris entre une valeur de seuil inférieur et une valeur de seuil supérieur, le débit de fluide issu de la deuxième entrée (257B) croît lorsque la température diminue.

15. Véhicule automobile comportant un élément de transmission selon l'une quelconque des revendications 1 à 10.

## Claims

1. Transmission element for a power train of the parallel hybrid type, the said element (25) comprising a motion input shaft (37) intended to be connected to an internal combustion engine, a motion output shaft (39) intended to be connected to a gearbox, an electric machine (31) having a stator (61) and a rotor (63), a first clutch (33) for coupling the input shaft (37) and the rotor (63), and a second clutch (35) for coupling the rotor (63) and the output shaft (39), the said clutches (33, 35) being of the wet type, the said transmission element (25) additionally comprising a lubricating and/or cooling fluid circuit, this circuit comprising a chamber (53) for lubricating and/or cooling the clutches (33, 35) and the electric machine (31), a lubricating and/or cooling fluid reservoir (251), and at least one pump (255, 265) connected on the one hand to the said reservoir (251) and on the other hand to the said chamber (53), **characterized in that** the said pump (255, 265) is additionally connected to a recycling line (259) of the said chamber (53), the lubricating and/or cooling circuit comprising selection means (257) placed upstream of the pump (255, 265), such that the said pump is capable of supplying the said chamber (53) with pressurized fluid selectively from the reservoir (251) and from the recycling line (259) based on the temperature of the fluid passing through the selection means (257).

2. Transmission element according to Claim 1, **characterized in that** the selection means (257) have two fluid inlets (257A, 257B), a first (257A) of which is connected to the reservoir (251) and the second (257B) of which is connected to the recycling line (259), and a fluid outlet (257C) connected to the pump (255, 265), the selection means (257) operating such that, during operation of the transmission element,
- the total flow of fluid passing through the outlet (257C) of the selection means (257) is substantially constant, and
- over a range of temperature of the fluid passing through the selection means (257), ranging between a lower threshold value and an upper threshold value, the flow of fluid emanating from the second inlet (257B) increases when the temperature decreases.

3. Transmission element according to Claim 2, **characterized in that** the selection means (257) comprise a thermostatic valve.

4. Transmission element according to any one of Claims 1 to 3, **characterized in that** the chamber (53) for lubricating and/or cooling the clutches (33, 35) also constitutes a chamber for lubricating and/or cooling the electric motor (31), such that the circuit for lubricating and/or cooling the clutches (33, 35) also constitutes a circuit for lubricating and/or cooling the electric motor (31).

5. Transmission element according to any one of Claims 1 to 4, additionally comprising means for controlling the said clutches (33, 35), which comprise a hydraulic control circuit including a pressure chamber (201, 202) for each clutch (33, 35), such that the control fluid pressure which prevails in a pressure chamber (201, 202) determines the state of the respective clutch (33, 35), **characterized in that** the control fluid consists of the lubricating and/or cooling fluid, the control circuit and the lubricating and/or cooling circuit having in common at least the said reservoir (251), the said recycling line (259) and the said selection means (257).

6. Transmission element according to Claim 5, **characterized in that** the hydraulic control circuit comprises a distribution block (261) connected to the pump (265) downstream of the latter and designed to distribute the fluid to the pressure chambers (201, 202) .

7. Transmission element according to Claim 6, **characterized in that** the said control circuit comprises a pressure accumulator (276), and the distribution block (261) comprises an inlet/outlet channel (273) connected to the said accumulator (276), and a charging/discharging solenoid valve (283) assigned to the said inlet/outlet channel.

8. Transmission element according to Claim 6 or 7, **characterized in that** the distribution block (261) comprises an outlet control channel (271, 272) for each pressure chamber (201, 202), and a respective solenoid valve (281, 282), assigned to each of the said control channels, for controlling the control flow.

9. Transmission element according to Claim 8, **characterized in that** the said solenoid control valves (281, 282) are of the proportional type.

10. Transmission element according to any one of Claims 1 to 9, **characterized in that** it comprises a second pump (255) connected upstream to the outlet (257C) of the selection means (257) and downstream, via a lubricating and/or cooling outlet channel (260), to the lubricating and/or cooling chamber (53).

11. Method of lubricating and/or cooling the clutches (33, 35) of a transmission element according to any one of Claims 1 to 10, **characterized in that**, during operation of the transmission element:
- the lubricating and/or cooling chamber (53) is supplied with a total flow of fluid at the outlet (257C) of the selection means (257), resulting from a first flow of fluid emanating from the first inlet (257A) and from a second flow of fluid emanating from the second inlet (257B), such that the said first and second flows are determined based on the temperature of the fluid passing through the selection means (257).

12. Method according to Claim 11, **characterized in that**
- the total flow of fluid passing through the outlet (257C) of the selection means (257) is substantially constant, and
- over a range of temperature of the fluid passing through the selection means (257), ranging between a lower threshold value and an upper threshold value, the flow of fluid emanating from the second inlet (257B) increases when the temperature decreases.

13. Method of lubricating and/or cooling and controlling the clutches (33, 35) of a transmission element according to any one of Claims 5 to 9, **characterized in that**, during operation of the transmission element:
- the lubricating and/or cooling chamber (53), and optionally the pressure chambers (201, 202), are supplied with a total flow of fluid at the outlet (257C) of the selection means (257), resulting from a first flow of fluid emanating from the first inlet (257A) and from a second flow of fluid emanating from the second inlet (257B), such that the said first and second flows are determined based on the temperature of the fluid passing through the selection means (257).

14. Method according to Claim 13, **characterized in that**
- the total flow of fluid passing through the outlet (257C) of the selection means (257) is substantially constant, and
- over a range of temperature of the fluid passing through the selection means (257), ranging between a lower threshold value and an upper threshold value, the flow of fluid emanating from the second inlet (257B) increases when the temperature decreases.

15. Motor vehicle comprising a transmission element according to any one of Claims 1 to 10.

## Patentansprüche

1. Kraftübertragungselement für einen Traktionsstrang des Parallelhybrid-Typs, wobei das Element (25) eine Antriebswelle (37), die dazu bestimmt ist, mit einer Brennkraftmaschine verbunden zu werden, eine Abtriebswelle (39), die dazu bestimmt ist, mit einem Getriebe verbunden zu werden, einen Elektromotor (31) mit einem Stator (61) und einem Rotor (63), eine erste Kupplung (33) für eine Verbindung zwischen der Antriebswelle (37) und dem Rotor (63) sowie eine zweite Kupplung (35) für eine Verbindung zwischen dem Rotor (63) und der Abtriebswelle (39) enthält, wobei die Kupplungen (33, 35) vom Nasskupplungs-Typ sind, wobei das Kraftübertragungselement (25) außerdem einen Schmierungs- und/oder Kühlungsfluidkreis enthält, der eine Kammer (53) zum Schmieren und/oder Kühlen der Kupplungen (33, 35) und des Elektromotors (31), einen Vorratsbehälter (251) für Schmierungs- und/oder Kühlungsfluid und wenigstens eine Pumpe (255, 265), die einerseits mit dem Vorratsbehälter (251) und andererseits mit der Kammer (53) verbunden ist, aufweist, **dadurch gekennzeichnet, dass** die Pumpe (255, 265) außerdem mit einem Rückführungskanal (259) der Kammer (53) verbunden ist, wobei der Schmierungs- und/oder Kühlungskreis Auswahlmittel (257) enthält, die auf der Einlassseite der Pumpe (255, 265) angeordnet sind, derart, dass die Pumpe die Kammer (53) in Abhängigkeit von der Temperatur des sich durch die Auswahlmittel (257) bewegenden Fluids wahlweise mit unter Druck stehendem Fluid von dem Vorratsbehälter (251) oder von dem Rückführungskanal (259) versorgen kann.

2. Kraftübertragungselement nach Anspruch 1, **dadurch gekennzeichnet, dass** die Auswahlmittel (257) zwei Fluideingänge (257A, 257B), wovon ein erster Eingang (257A) mit dem Vorratsbehälter (251) verbunden ist und der zweite Eingang (257B) mit dem Rückführungskanal (259) verbunden ist, und einen Fluidausgang (257C), der mit der Pumpe (255, 265) verbunden ist, aufweisen, wobei die Auswahlmittel (257) in der Weise arbeiten, dass im Betrieb des Kraftübertragungselements
- der Gesamtdurchfluss des Fluids, das sich durch den Ausgang (257C) der Auswahlmittel (257) bewegt, im Wesentlichen konstant ist und
- in einem Temperaturbereich des sich durch die Auswahlmittel (257) bewegenden Fluids, der zwischen einem unteren Schwellenwert und einem oberen Schwellenwert liegt, der Durchfluss des von dem zweiten Eingang (257B) stammenden Fluids zunimmt, wenn die Temperatur abnimmt.

3. Kraftübertragungselement nach Anspruch 2, **dadurch gekennzeichnet, dass** die Auswahlmittel (257) ein Thermostatventil enthalten.

4. Kraftübertragungselement nach einem der Ansprüche 1 bis 3, **dadurch gekennzeichnet, dass** die Kammer (53) zum Schmieren und/oder Kühlen der Kupplungen (33, 35) außerdem eine Kammer zum Schmieren und/oder Kühlen des Elektromotors (31) bildet, derart, dass der Kreis zum Schmieren und/oder Kühlen der Kupplungen (33, 35) auch einen Kreis zum Schmieren und/oder Kühlen des Elektromotors (31) bildet.

5. Kraftübertragungselement nach einem der Ansprüche 1 bis 4, das außerdem Mittel zum Steuern der Kupplungen (33, 35) enthält, die einen Hydrauliksteuerkreis aufweisen, der eine Druckkammer (201, 202) für jede Kupplung (33, 35) enthält, derart, dass der Fluidsteuerdruck, der in der Druckkammer (201, 202) herrscht, den Zustand der jeweiligen Kupplung (33, 35) bestimmt, **dadurch gekennzeichnet, dass** das Steuerfluid aus Schmierungs- und/oder Kühlungsfluid gebildet ist, wobei der Steuerkreis und der Schmierungs- und/oder Kühlungskreis wenigstens den Vorratsbehälter (251), den Rückführungskanal (259) und die Auswahlmittel (257) gemeinsam haben.

6. Kraftübertragungselement nach Anspruch 5, **dadurch gekennzeichnet, dass** der Steuerhydraulikkreis einen Verteilerblock (261) enthält, der mit der Pumpe (265) auf ihrer Förderseite verbunden ist und ausgelegt ist, um das Fluid an die Druckkammern (201, 202) zu verteilen.

7. Kraftübertragungselement nach Anspruch 6, **dadurch gekennzeichnet, dass** der Steuerkreis einen Druckakkumulator (276) enthält und der Verteilerblock (261) einen Eingangs-/Ausgangs-Weg (273), der mit dem Akkumulator (276) verbunden ist, und ein Lade-/Entlade-Elektroventil (283), das dem Eingangs-/Ausgangsweg zugeordnet ist, enthält.

8. Kraftübertragungselement nach Anspruch 6 oder 7, **dadurch gekennzeichnet, dass** der Verteilerblock (261) einen Ausgangssteuerweg (271, 272) für jede Druckkammer (201, 202) und ein Elektroventil zum Steuern des jeweiligen Steuerdurchflusses (281, 282), das jedem der Steuerwege zugeordnet ist, enthält.

9. Kraftübertragungselement nach Anspruch 8, **dadurch gekennzeichnet, dass** die Steuerelektroventile (281, 282) vom proportionalen Typ sind.

10. Kraftübertragungselement nach einem der Ansprüche 1 bis 9, **dadurch gekennzeichnet, dass** es eine zweite Pumpe (255) enthält, die auf der Einlassseite mit dem Ausgang (257C) der Auswahlmittel (257) und auf der Auslassseite über einen Schmierungs- und/oder Kühlungs-Ausgangsweg (260) mit der Schmierungs- und/oder Kühlungskammer (53) verbunden ist.

11. Verfahren zum Schmieren und/oder Kühlen der Kupplungen (33, 35) eines Kraftübertragungselements nach einem der Ansprüche 1 bis 10, **dadurch gekennzeichnet, dass** im Betrieb des Kraftübertragungselements
- die Schmierungs- und/oder Kühlungskammer (53) mit einem Gesamtfluiddurchfluss am Ausgang (257C) der Auswahlmittel (257) versorgt wird, der sich aus einem ersten Fluiddurchfluss von dem ersten Eingang (257A) und aus einem zweiten Fluiddurchfluss von dem zweiten Eingang (257B) ergibt, derart, dass der erste und der zweite Durchfluss als Funktion der Temperatur des sich durch die Auswahlmittel (257) bewegenden Fluids bestimmt werden.

12. Verfahren nach Anspruch 11, **dadurch gekennzeichnet, dass**
- der Gesamtdurchfluss des sich durch den Ausgang (257C) der Auswahlmittel (257) bewegenden Fluids im Wesentlichen konstant ist und
- in einem Temperaturbereich des sich durch die Auswahlmittel (257) bewegenden Fluids, der zwischen einem unteren Schwellenwert und einem oberen Schwellenwert liegt, der Fluiddurchfluss, der vom zweiten Eingang (257B) ausgeht, zunimmt, wenn die Temperatur abnimmt.

13. Verfahren zum Schmieren und/oder Kühlen und Steuern der Kupplungen (33, 35) eines Kraftübertragungselements nach einem der Ansprüche 5 bis 9, **dadurch gekennzeichnet, dass** im Betrieb des Kraftübertragungselements:
- die Schmierungs- und/oder Kühlungskammer (53) und eventuell die Druckkammern (201, 202) mit einem Gesamtfluiddurchfluss am Ausgang (257C) der Auswahlmittel (257) versorgt werden, der sich aus einem ersten Fluiddurchfluss vom ersten Eingang (257A) und aus einem zweiten Fluiddurchfluss vom zweiten Eingang (257B) ergibt, derart, dass der erste und der zweite Durchfluss als Funktion der Temperatur des sich durch die Auswahlmittel (257) bewegenden Fluids bestimmt werden.

14. Verfahren nach Anspruch 13, **dadurch gekennzeichnet, dass**
- der Gesamtdurchfluss des sich durch den Ausgang (257c) der Auswahlmittel (257) bewegenden Fluids im Wesentlichen konstant ist und
- in einem Temperaturbereich des sich durch die Auswahlmittel (257) bewegenden Fluids, der zwischen einem unteren Schwellenwert und einem oberen Schwellenwert liegt, der Fluiddurchfluss vom zweiten Eingang (257B) zunimmt, wenn die Temperatur abnimmt.

15. Kraftfahrzeug, das ein Kraftübertragungselement nach einem der Ansprüche 1 bis 10 enthält.
